# EUROPEAN PATENT SPECIFICATION

(11) **EP 1 478 221 B1**
(45) Date of publication and mention of the grant of the patent: **10.01.2007**
(21) Application number: 03703622.5
(22) Date of filing: 07.02.2003
(51) Int. Cl.: A01C 7/08

(54) **A DISTRIBUTOR DEVICE FOR AN AGRICULTURAL MACHINE FOR SPREADING GRANULAR MATERIAL AND SUCH AN AGRICULTURAL MACHINE**
VERTEILVORRICHTUNG FÜR EINE LANDMASCHINE ZUM STREUEN VON KÖRNIGEM MATERIAL UND SOLCH EINE LANDMASCHINE
DISTRIBUTEUR POUR MACHINE AGRICOLE DESTINE A REPANDRE DES MATIERES GRANULEES, ET MACHINE AGRICOLE ASSOCIEE

(30) Priority: 27.02.2002 SE 0200612
(43) Date of publication of application: 24.11.2004
(73) Proprietor: Väderstad-Verken AB, 590 21 Väderstad (SE)
(72) Inventor: HUNDEBY, Dave, Saskatoon, Saskatchewan S7K 3J7 (CA); KJELLSSON, Mats, S-242 92 Hörby (SE)
(74) Representative: Stein, Jan Anders Lennart
(86) International application number: PCT/SE2003/000207
(87) International publication number: WO 2003/071856

(56) References cited:
- EP-A1- 0 674 830
- EP-A2- 0 803 177
- WO-A1-97/21338
- DE-A1- 19 542 057
- US-A- 3 515 315

## Description

### TECHNICAL FIELD OF THE INVENTION

The present invention relates to a distributor device for an agricultural machine in accordance with the pre-characterising portion of claim 1.

The present invention also relates to such an agricultural machine.

### BACKGROUND OF THE INVENTION

Such a distributor device and such an agricultural machine are known through EP-A-0 674 830, wherein a plurality of different closing members are described. However, those are disadvantageous, since they require complicated arrangements for moving the closing members.

Other distributors having closable outlet means are known from WO 97/21338, EP-A-0 687 406, EP-A-0 803 177, US-A-3 515 315, EP-A-0 309 608, DE-U-9313779.6, US-A-4 989 784, US-A-4 489 892, EP-A-0 328 858, DE-A-2 603 088, EP-A-0 252 348, DE-A-4 004 685 and DE-A-195 42 057.

An arc-shaped distributor device having closable outlet members is known from SU-A-1 457 836.

### SUMMARY OF THE INVENTION

One object of the invention is to improve the closing off device in the existing distributor device and in the existing agricultural machine, respectively. This has been achieved by a distributor device having the features of the characterising portion of claim 1.

Hereby, a simplified design of the closing off device is achieved, which allows for simpler and more reliable adjustment. Above all, the risk is reduced, compared to in previously known distributor devices, that the function of the closing member is disrupted by the granules as such. A closing member can of course be used to close off two or more neighbouring outlet members. However, closing off outlet members at even intervals around the perimeter of the housing avoids an unequal flow in the distributor device.

Suitably, the inlet member and the outlet member are arranged at the housing in such a way that an airflow created by an air flow source is allowed to simultaneously flow from said inlet member towards said outlet members.

The driving device may be adapted to close a predetermined number of said outlet members and to simultaneously keep a predetermined number of said outlet members open. For this purpose, the closing off device comprises a plurality of closing members adapted to be moved in the direction of the perimeter of the housing and essentially across the direction of flow of the outlet members.

The closing member is preferably placed at least partly between two outlet members when the closing member is not closing the outlet member. The closing member thereby does not interfere with the flow.

The carriage member is preferably pivoted in the centre of the housing. Alternatively, the carriage member is pivoted at the perimeter of the housing. In cases where two or more closing members are used, one or more carriage members may be pivoted centrally while the other or others are pivoted peripherally. Alternatively, both or all carriage members are pivoted centrally or peripherally.

The closing members are preferably adapted to close off a predetermined number of outlet members, placed along the perimeter of the housing at predetermined positions. Hereby, an adjustment of the distribution of seed and/or fertiliser can be made.

Advantageously, the closing members are evenly distributed about the perimeter of the housing and are connected to a common control device adapted to simultaneously move the closing members to an essentially closed position to essentially close off every second outlet member simultaneously. Half the flow can thereby be closed off from delivery of seed or fertiliser, e.g. where only half the machine width is to be used, which occurs when the width of the field is not evenly divisible by the width of the agricultural machine.

The carriage members are arranged relative to each other in such a way that the closing members occur at different radii from the centre of the housing. The closing members can hereby be placed in front of each other in the idle position, i.e. when they are not located in front of an outlet member. Alternatively, the carriage members are arranged relative to each other in such a way that the closing members occur at essentially the same radius from the centre of the housing. The closing members can hereby be placed beside each other and thus form a wider barrier wall.

### DRAWING SUMMARY

In the following, the invention is described in more detail with reference to the attached drawings in which:
Figure 1a is a perspective view of an agricultural machine with three distributor devices for granules, plus tubes and coulters,
Figure 1b is an enlargement of the section in Figure 1a and viewed from the opposite direction,
Figure 2 illustrates schematically the agricultural machine in Figure 1a viewed from above, and with hoppers for different types of granules, such as seed and fertiliser,
Figure 3 illustrates schematically how the tubes in Figure 1a are connected to the respective seed and fertiliser coulters,
Figure 4 is an exploded view of a distributor device connected to a feed pipe and provided with a plurality of closing members,
Figure 5 illustrates a distributor device with an annular carriage member with closing members,
Figure 6 illustrates a distributor device with two annular carriage members with closing members,
Figure 7a and 7b illustrate a distributor device with two star-shaped carriage members,
Figure 8 illustrates a distributor device with an annular carriage member and with the closing members arranged outside the housing of the distributor device,
Figures 9a and 9b are top views of distributor devices having an arc shape, and
Figure 10 is a flow chart regarding control of feed of granules.

### DETAILED DESCRIPTION

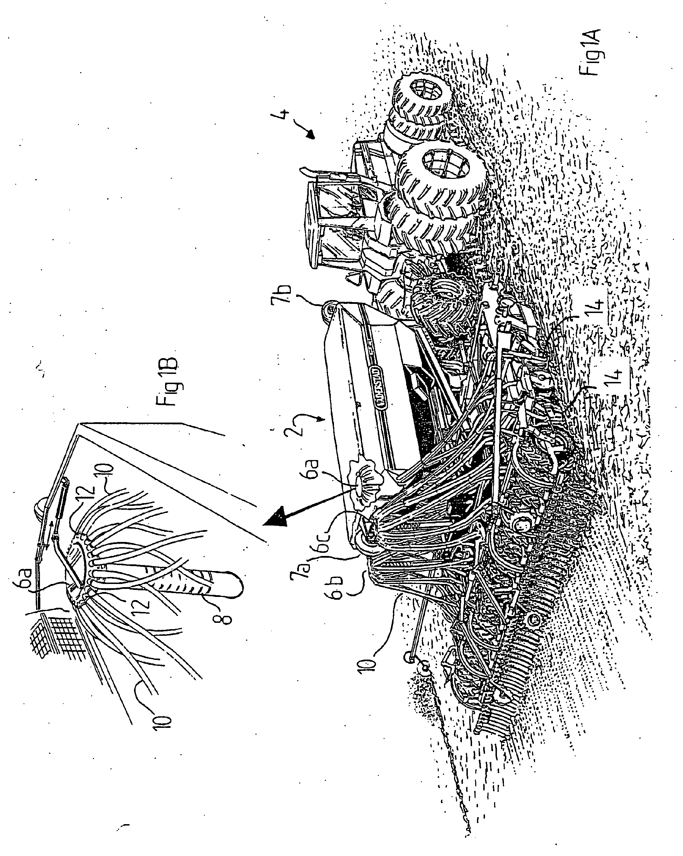

Figure 1 a shows an agricultural machine 2 drawn by a tractor 4. In the agricultural machine, there are three devices in the form of distributor heads 6a, 6b, 6c for granules, such as seed or fertiliser. The distributor head 6a is also shown in the enlargement sketch in Figure 1b. A substantially vertical feed pipe 8 supplies the distributor head centrally from below with granules borne by a stream of air from an air stream source, such as a fan 7a, while distributor heads 6b and 6c are supplied by the air stream from an air stream source, such as a fan 7b.

A plurality of tubes 10 are connected at one end to individual outlet members 12 on the distributor head and at the other end to individual coulters 14, e.g. a seed coulter or a fertiliser coulter.

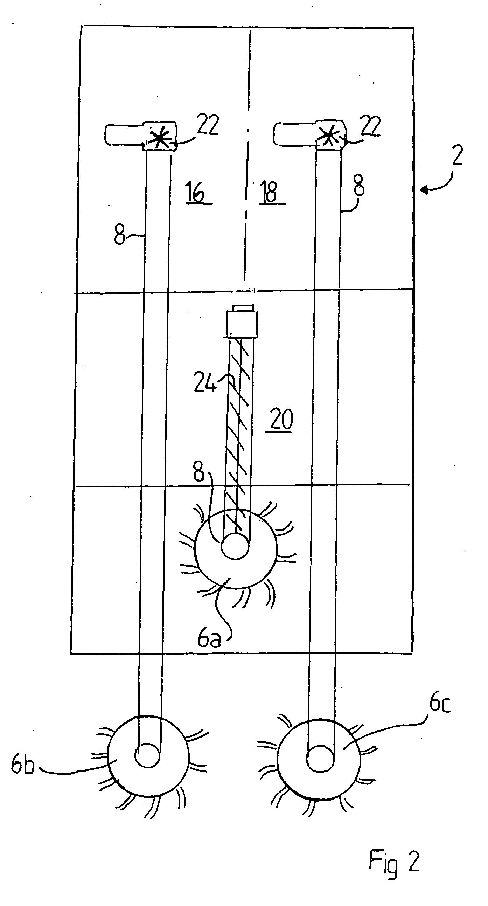

Figure 2 shows schematically the agricultural machine 2, which comprises a first hopper 16 for seed, a second hopper 18 for seed and a third hopper 20 for fertiliser.

In the first and the second hopper 16, 18 there is a feed wheel 22 for feeding the granules to the feed pipe 8. In the third hopper there is instead an auger feed 24 for this purpose, at the rear end of which is applied a stream of air for transporting the granules up to the distributor head 6a.

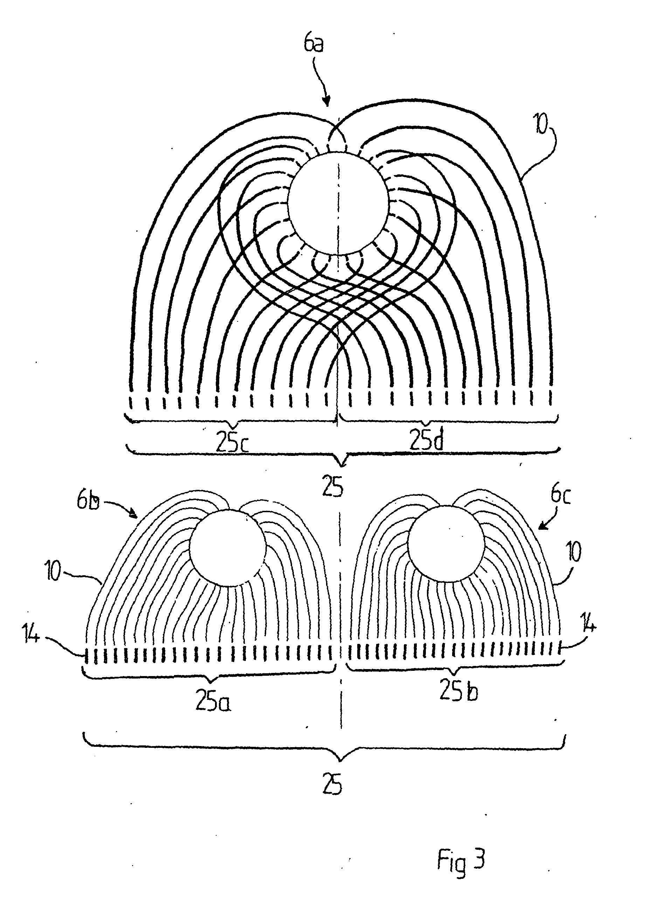

In Figure 3 is shown schematically how the tubes 10 are connected between the distributor heads 6a, 6b and 6c and the coulters 14, respectively. For the same machine width 25, distributor head 6a is used for dispersal of fertiliser, while two distributor heads 6b and 6c are used for dispersal of seed. The reason for this is that the seed coulters are more densely arranged than the fertiliser coulters. For example, the distance between two neighbouring seed coulters is 125 mm, while the distance between two neighbouring fertiliser coulters is 250 mm. This means that the distributor head 6a with its twenty-four outlet members 12 is adequate for one machine width 25 as regards fertiliser, while it is necessary to have two distributor heads 6b and 6c with twenty-four outlet members 12 for seed. This means in turn that when only half the machine width 25a or 25b is to be used, e.g. when the width of a field does not correspond to an integer of machine widths 25, it is sufficient as regards seed output to shut off one of the distributor heads 6b or 6c (also called half machine shut-off).

A more complicated form of shut-off is used to shut off half the machine width 25c or 25d as regards distributor head 6a. Here, it is suitable to close off every second outlet member 12 to maintain an even flow of air and granules through the distributor head 6a. This means that the tubes 10 connected to alternate outlet members 12 lead to one half 25c of the row of fertiliser coulters 14 (see upper part of Figure 3), while the other tubes 10 lead to the other half 25d of the row of fertiliser coulters 14. How the outlet members 12 are closed off will be described below.

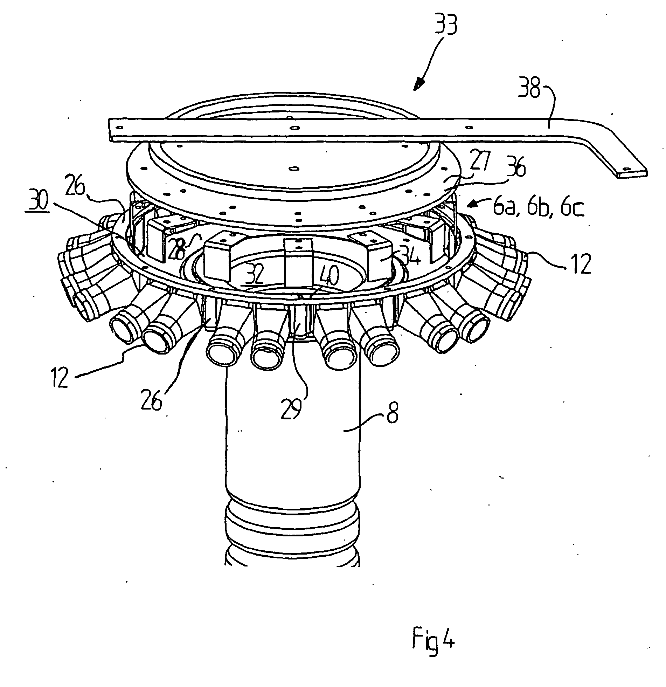

Figure 4 shows the distributor head 6a comprising an essentially cylindrical housing 26 with a lid 27, a base 28 in which an inlet member 32 receives the feed pipe 8, and a wall 29. The housing is concentric around the inlet member 32 along the axis of the extension of the feed pipe 8. The housing 26 thus forms an essentially annular space 30 around the inlet member 32. Around the perimeter of the housing, i.e. in its wall 29, are twenty-four outlet members 12 arranged in pairs.

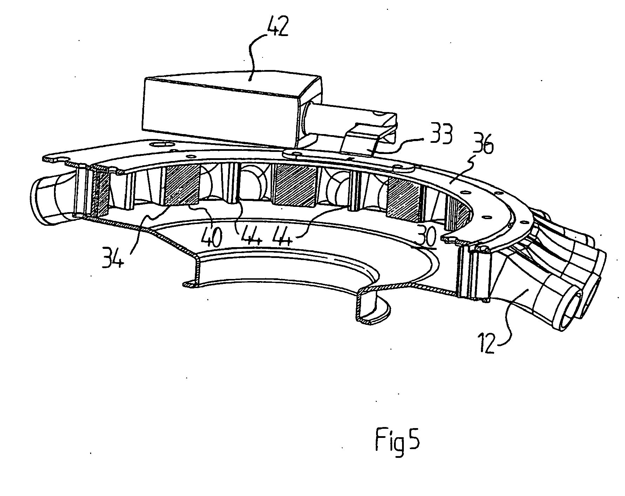

For the above-mentioned half machine shut-off there is a closing off device 33, comprising 12 closing members 34 in the form of angle plates arranged inside the housing 26. The closing members 34 are connected to the lid 27, which also constitutes a carriage member 36 for these. The lid 27 or the carriage member 36 is equipped with an arm 38 for power transmission from a driving device in the form of a power source (see reference numeral 42 in Figure 5). The power source 42, the arm 38, the carriage member 36 and the closing members 34 thus together constitute the closing off device 33. The power source may be an electric or pneumatic motor or the like.

When the arm 38 turns the lid 27, the plates 34 will be caused to slide about the perimeter of the housing, i.e. the carriage member 36 is pivoted on the inside of the perimeter of the housing but it can also be pivoted in the centre of the lid.

Figure 5 shows an alternative embodiment where the carriage member 36 is constituted by a ring to which are mounted the closing members 34, i.e. the carriage member 36 and lid 27 (not shown in Figure 5) constitute separate entities.

The closing members 34 are shown in their idle position 40, i.e. when the outlet members 12 are open. When every second outlet member 12 is closed, the power source 42 is activated, and it influences the arm 38 to rotate the ring 36 until the closing member 34 abuts a neighbouring stop member 44. The outlet member 12 is thereby blocked off.

When one half of the machine width, e.g. 25c, is to be shut off, the carriage member 36 is rotated e.g. clockwise until the closing member 34 abuts a neighbouring stop member in the direction of rotation, while if the other half of the machine width 25d is to be shut off, the carriage member 36 is rotated anticlockwise until the closing member 34 abuts the other neighbouring stop member 44.

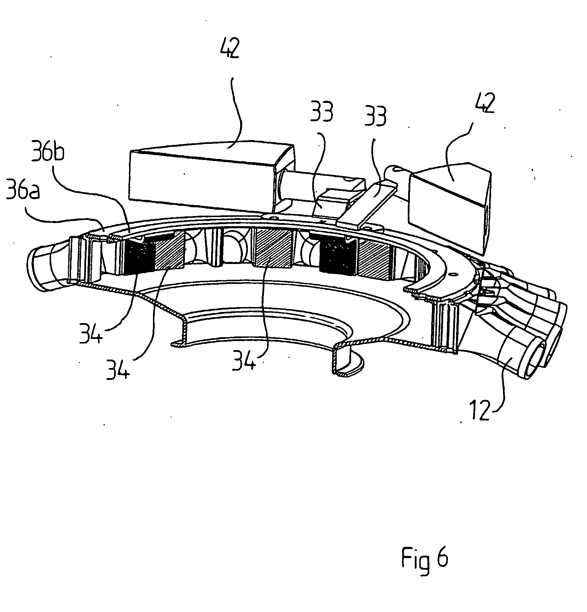

Figure 6 shows two carriage members 36a and 36b in the form of concentrically arranged rings, each of which is provided with closing members 34. The rings 36a, 36b are each connected to individual arms 33, which in turn are connected to the power sources 42. The rings 36a, 36b are fitted with closing members 34, likewise concentrically arranged so that they can bypass each other. In this way, selected groups of outlet members 12 can be closed off. Furthermore, the closing members 34 can be placed in front of each other, or beside or in front of outlet members 12. The number of closing members 34 on ring 36a is typically half that of the outlet members 12 to allow half machine shut-off, while ring 36b is fitted with two, four, six or eight closing members 34 to allow so-called tramline marking, i.e. markings intended to help the tractor driver in subsequent passes with fertiliser spreader or crop sprayer.

Alternatively, the closing members 34 can be arranged so that they lie on the same radius, although still with concentric rings. However, this requires that the idle positions of individual closing members do not coincide, since they cannot be placed in front of each other.

Of course, closing off of the outlet members 12 can also be achieved in accordance with the principles described in relation to Figure 5, by means of the carriage member in the embodiment of Figure 6.

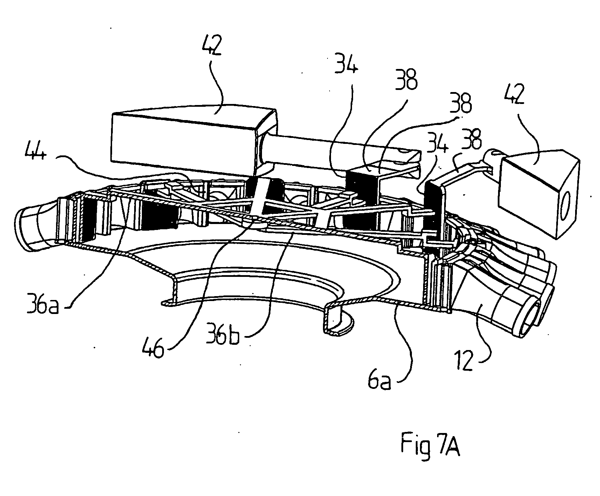

Figure 7a shows an alternative embodiment where the carriage members 36a, 36b are star-shaped. In the figure, however, several have been omitted for the sake of clarity. The carriage member 36a is situated above the carriage member 36b and they are pivoted about a central pivot 46 and are rotated around this by their individual power sources 42. Similarly to the above, power is transferred to the respective carriage member 36a, 36b by means of an arm 38, which forms an integral part of one of the closing members 34. All closing members on the respective carriage members 36a, 36b are arranged at the same radius from pivot 46. In the figure, the closing members are in the idle position, i.e. the outlet members 12 are open.

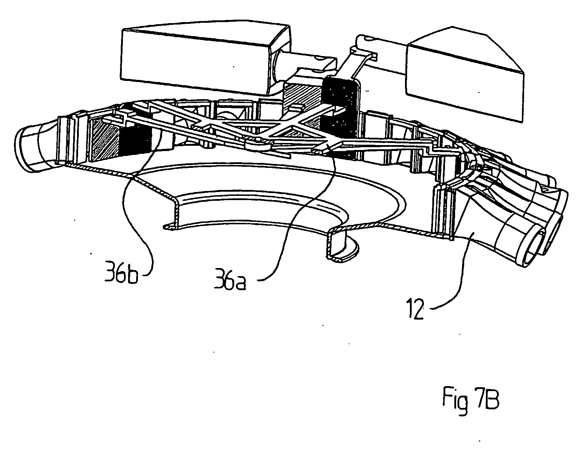

In Figure 7b, one of the carriage members 36a has been rotated anticlockwise, while the other carriage member 36b has been rotated clockwise, so that two neighbouring outlet members have been closed off, while two other neighbouring outlet members 12 have been left open. This type of shut-off is appropriate for certain types of crops.

Of course, closing off of outlet members 12 can also be achieved in accordance with the principles described in relation to Figures 5 and 6 above, by means of the carriage members in the embodiment of Figure 7.

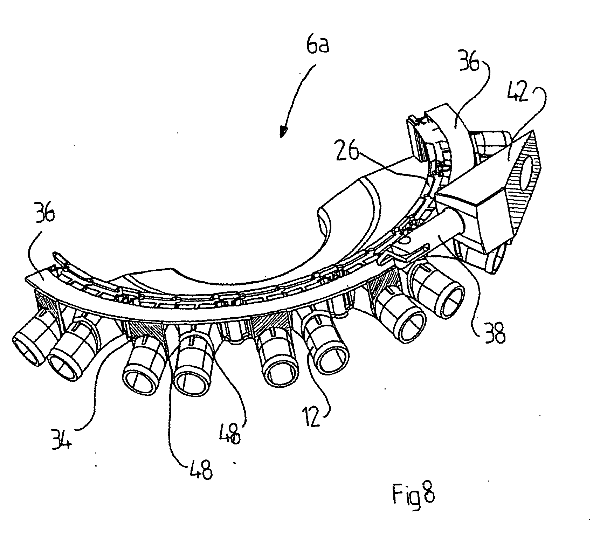

Figure 8 shows the distributor 6a with alternative outlet members 12 in which each one is fitted with a slot 48 to receive the closing member 34. The carriage member 36 is arranged outside the perimeter of the housing and is connected to the power source 42 via arm 38. The closing members 34 on carriage member 36 are shown in their closed positions in every second outlet member for the accomplishment of half machine shut-off, e.g. 25c (see Fig. 3). For shut-off of the other half of the machine 25d, the closing members 34 are inserted into the respective slots 48 of other outlet members 12. In the idle position, i.e. when all outlet members are open, closing members 34 remain in the spaces between the outlet members 12 arranged in pairs.

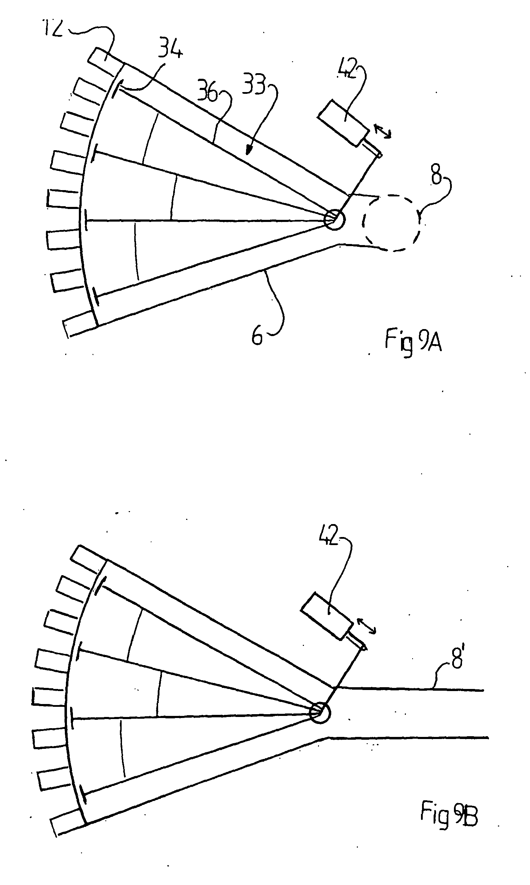

Figures 9a and 9b show arc-shaped distributors 6. Alternate outlet members 12 can be closed by the closing off device 33, comprising the closing off members 34 arranged on the carriage member 36, which is pivotable about the pivot 46 by means of the power source 42 via arm 38.

In the embodiment shown in Figure 9a, the granules are borne by air through the substantially vertical feed pipe 8 to the distributor device 6, whereas in the embodiment of Figure 9b, the granules are likewise borne by air, however through a substantially horizontal feed pipe 8. Of course, the feed pipe 8 may be inclined or curved instead.

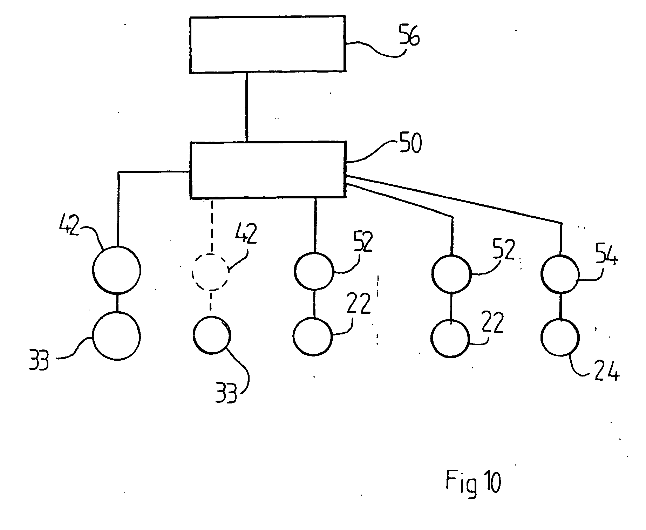

Figure 10 shows a control unit 50 which controls the power source 42 for the respective carriage members 33, likewise a motor 52 for each feed wheel 22 that feeds the granules to the feed pipe 8 leading to the distributor heads 6b and 6c, and a motor 54 for the auger feed 24 that feeds the granules to the distributor head 6a via feed pipe 8. A user interface 56 is provided e.g. in the tractor 4 cab for entering control directions, which are executed by the control unit 50.

For half machine shut-off, i.e. when half of the outlet members 12 on the distributor head 6a are closed off, the speed of the motor 54 is reduced so that the auger feed 24 rotates at half the speed, which in turn results in that it delivers half the amount of granules compared to when the distributor head is fully open. The air stream delivered by the fan 7a remains constant. At half machine shut-off of distributor heads 6b and 6c, i.e. when either of these distributor heads is shut off, the control unit 50 stops one of the motors 52 that drive the feed wheel 22. The air stream remains unaltered through both feed pipes 8.

Of course the outlet members 12 can be arranged around the perimeter of the distribution housing at equal intervals. However, this requires a distributor head with a greater diameter to provide space for the closing members 34 between outlet members 12.

The number of carriage members is of course not limited to one or two, but more can be used, e.g. one per closing member. Each carriage member can thereby be connected to a separate power source, which provides the potential for individual control of opening and closing of each outlet member 12.

The driving member 42 in Figure 5, likewise the driving members 42 in Figures 6, 7a and 7b, have been described as being connected to the carriage members radially outside the perimeter of the housing. Alternatively, they may be connected to the pivot 46.

It has certainly been stated above that the distributor head 6a is to be used for fertiliser, while distributor heads 6b, 6c are used for seed, but if necessary distributor head 6a can instead be used for seed and distributor heads 6b, 6c for fertiliser.

Of course, the different embodiments of the closing off devices 33 of figures 4 to 8, are also applicable to the distributor devices of Figures 9a and 9b, respectively.

It should be noted that any combination of alternate closing off of the outlet members is possible in all of the above described embodiments.

## Claims

1. A distributor device for an agricultural machine (2) for spreading granular material, such as a seed drill or a fertiliser drill, comprising an at least partly circular housing (26) with an inlet member (32) arranged to be associated with an air stream source (7a, 7b) and with a hopper for granular material, a plurality of outlet members (12) arranged about the perimeter of the housing (26), wherein the air inlet member (32) and the air outlet members (12) are arranged at the housing in such a way that an air flow generated by the air stream source (7a, 7b) is allowed at the same time to flow from the air inlet member (32) in a direction towards the outlet members (12), wherein the outlet members (12) are arranged to be associated with coulters (14), and a closing off device (33) comprising a driving device for closing off said outlet members (12), **characterised in that** the closing off device (33) comprises a plurality of closing members (34) adapted to be moved in the direction of the perimeter of the housing (26) and essentially across the direction of flow of the outlet members (12) for closing off a predetermined number of said outlet members (12), and for keeping a predetermined number of said outlet members (12) open substantially simultaneously, and that the driving device for said closing off device (33) includes a power source (42).

2. A distributor device according to Claim 1, wherein the closing member (34) is at least partly placed between two outlet members (12) when the closing member is not closing off the outlet member (12).

3. A distributor device according to Claim 1 or 2, wherein the closing members (34) are adapted to close off a predetermined number of outlet members (12) placed about the perimeter of the housing (26) in predetermined positions.

4. A distributor device according to any one of Claims 1 to 3, wherein the closing members (34) are evenly distributed about the perimeter of the housing (26) and are connected to a common control unit (50) adapted to simultaneously move the closing members to an essentially closed position so as to essentially close off every second outlet member (12) simultaneously.

5. A distributor device according to any one of the preceding Claims, wherein the outlet members (12) are arranged in pairs about the perimeter of the housing (26), wherein the respective closing members (34) are arranged between two neighbouring pairs of outlet members (12) so as to close off at least one of the two outlet members (12) arranged in pairs.

6. A distributor device according to any one of the preceding Claims, wherein the housing (26) defines an essentially annular space (30) defined about the said inlet member (32), wherein the annular space discharges into the outlet members (12), wherein the said closing members (34) are arranged within the annular space (30) in the closed position and in the open position.

7. A distributor device according to any one of the preceding Claims, wherein the said closing members are arranged outside the housing (26) in such a way that they are within the outlet member (12) in the closed position and essentially outside the outlet member (12) in the open position.

8. A distributor device according to any one of the preceding Claims, wherein the closing off device (33) comprises at least one carriage member (36, 36a, 36b) adapted to carry a plurality of closing members (34) for simultaneous influence thereof, wherein the driving device comprises a driving member associated with the carriage member.

9. A distributor device according to Claim 8, wherein the carriage member is pivoted at either or both of the centre of the housing (26) and the perimeter of the housing.

10. A distributor device according to any one of the preceding Claims, wherein the closing off device comprises at least two separate carriage members (36a, 36b), wherein each carriage member is adapted to carry a plurality of closing members, wherein the driving device comprises a plurality of driving members and wherein each carriage member is associated with one of the driving members.

11. A distributor device according to Claim 10, wherein the number of carriage members is two, wherein each carriage member (36a, 36b) carries half of the total number of closing members, wherein the driving device comprises two driving members and wherein each carriage member is associated with an individual driving member.

12. A distributor device according to Claim 10 or 11, wherein the carriage members are arranged relative to each other in such a way that the closing members are sited at different radii from the centre of the housing (26).

13. A distributor device according to any one of Claims 10 to 12, wherein the carriage members are arranged relative to each other in such a way that the closing members are sited at essentially the same radius from the centre of the housing (26).

14. A distributor device according to any one of the preceding claims, wherein the housing (26) comprises a lid (27) and a base (28), wherein the said inlet member (32) is centrally arranged in the said base (28).

## Patentansprüche

1. Verteilvorrichtung für eine Landmaschine (2) zum Streuen von körnigem Material wie eine Saat-Drillmaschine oder eine Dünger-Drillmaschine, die ein mindestens teilweise kreisförmiges Gehäuse (26) mit einem Einlasselement (32), das so angeordnet ist, dass es mit einer Luftstromquelle (7a, 7b) und mit einem Fülltrichter für das körnige Material verbunden ist, mehrere Auslasselemente (12), die um den Umfang des Gehäuses (26) angeordnet sind, wobei das Luft-Einlasselement (32) und die Luft-Auslasselemente (12) am Gehäuse in einer Weise angeordnet sind, dass eine durch die Luftstromquelle (7a, 7b) erzeugte Luftströmung zur gleichen Zeit von dem Luft-Einlasselement (32) in eine Richtung zu den Auslasselementen (12) strömen kann, wobei die Auslasselemente (12) so angeordnet sind, dass sie mit Pflugmessern (14) verbunden sind, und eine Verschlussvorrichtung (33) mit einer Antriebsvorrichtung zum Verschließen der Auslasselemente (12) umfasst,
**dadurch gekennzeichnet, dass**
die Verschlussvorrichtung (33) mehrere Verschlusselemente (34) umfasst, die angepasst sind, um in die Richtung des Umfangs des Gehäuses (26) und im Wesentlichen über die Richtung der Strömung der Auslasselemente (12) bewegt zu werden, um die vorgegebene Anzahl der Auslasselemente (12) zu verschließen und eine vorgegebene Anzahl, der Auslasselemente (12) im Wesentlichen gleichzeitig offen zu halten, und **dadurch**, dass die Antriebsvorrichtung für die Verschlussvorrichtung (33) eine Energiequelle (42) aufweist.

2. Verteilvorrichtung nach Anspruch 1, wobei das Verschlusselement (34) mindestens teilweise zwischen zwei Auslasselementen (12) angeordnet ist, wenn das Verschlusselement das Auslasselement (12) nicht verschließt .

3. Verteilvorrichtung nach Anspruch 1 oder 2, wobei die Verschlusselemente (34) angepasst sind, um eine vorgegebene Anzahl von Auslasselementen (12) zu verschließen, die um den Umfang des Gehäuses (26) in vorgegebenen Positionen angeordnet sind.

4. Verteilvorrichtung nach einem der Ansprüche 1 bis 3, wobei die Verschlusselemente (34) gleichmäßig um den Umfang des Gehäuses (26) verteilt und mit einer gemeinsamen Steuereinheit (50) verbunden sind, die angepasst ist, um die Verschlusselemente gleichzeitig in eine im Wesentlichen geschlossene Position zu bewegen, um jedes zweite Auslasselement (12) gleichzeitig im Wesentlichen zu verschließen.

5. Verteilvorrichtung nach einem der vorhergehenden Ansprüche, wobei die Auslasselemente (12) paarweise um den Umfang des Gehäuses (26) angeordnet sind, wobei die jeweiligen Verschlusselemente (34) zwischen zwei benachbarten Paaren von Auslasselementen (12) angeordnet sind, so dass sie mindestens eines der zwei paarweise angeordneten Auslasselemente (12) verschließen.

6. Verteilvorrichtung nach einem der vorhergehenden Ansprüche, wobei das Gehäuse (26) einen im Wesentlichen ringförmigen Raum (30) begrenzt, der um das Einlasselement (32) definiert ist, wobei der ringförmige Raum in die Auslasselemente (12) mündet, wobei die Verschlusselemente (34) innerhalb des ringförmigen Raums (30) in der geschlossenen Position und in der offenen Position angeordnet sind.

7. Verteilvorrichtung nach einem der vorhergehenden Ansprüche, wobei die Verschlusselemente außerhalb des Gehäuses (26) in einer Weise angeordnet sind, dass sie sich innerhalb des Auslasselementes (12) in der geschlossenen Position und im Wesentlichen außerhalb des Auslasselementes (12) in der offenen Position befinden.

8. Verteilvorrichtung nach einem der vorhergehenden Ansprüche, wobei die Verschlussvorrichtung (33) mindestens ein Schlittenelement (36, 36a, 36b) umfasst, das angepasst ist, um mehrere Verschlusselemente (34) für deren gleichzeitiges Einwirken zu tragen, wobei die Antriebsvorrichtung ein Antriebselement umfasst, das mit dem Schlittenelement verbunden ist.

9. Verteilvorrichtung nach Anspruch 8, wobei das Schlittenelement entweder an der Mitte des Gehäuses (26) oder dem Umfang des Gehäuses oder beiden drehbar gelagert ist.

10. Verteilvorrichtung nach einem der vorhergehenden Ansprüche, wobei die Verschlussvorrichtung mindestens zwei getrennte Schlittenelemente (36a, 36b) umfasst, wobei jedes Schlittenelement angepasst ist, um mehrere Verschlusselemente zu tragen, wobei die Antriebsvorrichtung mehrere Antriebselemente umfasst und wobei jedes Schlittenelement mit einem der Antriebselemente verbunden ist.

11. Verteilvorrichtung nach Anspruch 10, wobei die Anzahl der Schlittenelemente zwei ist, wobei jedes Schlittenelement (36a, 36b) die Hälfte der gesamten Anzahl der Verschlusselemente trägt, wobei die Antriebsvorrichtung zwei Antriebselemente umfasst und wobei jedes Schlittenelement mit einem einzelnen Antriebselement verbunden ist.

12. Verteilvorrichtung nach Anspruch 10 oder 11, wobei die Schlittenelemente relativ zueinander in einer Weise angeordnet sind, dass die Verschlusselemente mit unterschiedlichen Radien von der Mitte des Gehäuses (26) gelegen sind.

13. Verteilvorrichtung nach einem der Ansprüche 10 bis 12, wobei die Schlittenelemente relativ zueinander in einer Weise angeordnet sind, dass die Verschlusselemente mit dem im Wesentlichen gleichen Radius von der Mitte des Gehäuses (26) gelegen sind.

14. Verteilvorrichtung nach einem der vorhergehenden Ansprüche, wobei das Gehäuse (26) einen Deckel (27) und ein Unterteil (28) umfasst, wobei das Einlasselement (32) mittig in dem Unterteil (28) angeordnet ist.

## Revendications

1. Distributeur pour une machine agricole (2) pour répandre un matériau granulaire, tel qu'un semoir de graines ou un enfouisseur de fertilisant, comprenant un corps au moins partiellement circulaire (26) comportant un élément d'admission (32) disposé pour être associé avec une source de filet d'air (7a, 7b) et avec une trémie pour le matériau granulaire, une pluralité d'éléments d'échappement (12) disposés autour du périmètre du corps (26), dans lequel l'élément d'admission d'air (32) et les éléments d'échappement d'air (12) sont disposés sur le corps de telle sorte qu'un écoulement d'air généré par la source de filet d'air (7a, 7b) peut au même moment s'écouler depuis l'élément d'admission d'air (32) en direction des éléments d'échappement (12), dans lequel les éléments d'échappement (12) sont disposés pour être associés à des coutres (14), et un dispositif de fermeture (33) comprenant un dispositif d'entraînement pour refermer lesdits éléments d'échappement (12), **caractérisé en ce que** le dispositif de fermeture (33) comprend une pluralité d'éléments de fermeture (34) adaptés pour être déplacés dans la direction du périmètre du corps (26) et essentiellement en travers de la direction de l'écoulement des éléments d'échappement (12) pour refermer un nombre prédéterminé desdits éléments d'échappement (12), et pour garder un nombre prédéterminé desdits éléments d'échappement (12) ouverts essentiellement simultanément, et que le dispositif d'entraînement dudit dispositif de fermeture (33) comprend une source d'alimentation (42).

2. Distributeur selon la revendication 1, dans lequel l'élément de fermeture (34) est au moins partiellement placé entre deux éléments d'échappement (12) quand l'élément de fermeture ne referme pas l'élément d'échappement (12).

3. Distributeur selon la revendication 1 ou 2, dans lequel les éléments de fermeture (34) sont adaptés pour refermer un nombre prédéterminé d'éléments d'échappement (12) placés autour du périmètre du corps (26) dans des positions prédéterminées.

4. Distributeur selon l'une quelconque des revendications 1 à 3, dans lequel les éléments de fermeture (34) sont distribués régulièrement autour du périmètre du corps (26) et sont raccordés à une unité de contrôle courante (50) adaptée pour déplacer simultanément les éléments de fermeture jusqu'à une position essentiellement fermée de manière à essentiellement refermer un élément d'échappement sur deux (12) simultanément.

5. Distributeur selon l'une quelconque des revendications précédentes, dans lequel les éléments d'échappement (12) sont disposés par paires autour du périmètre du corps (26), dans lequel les éléments de fermeture respectifs (34) sont disposés entre deux paires voisines d'éléments d'échappement (12) de manière à refermer au moins un des deux éléments d'échappement (12) disposés par paires.

6. Distributeur selon l'une quelconque des revendications précédentes, dans lequel le corps (26) définit un espace essentiellement annulaire (30) défini autour dudit élément d'admission (32), dans lequel l'espace annulaire se décharge dans les éléments d'échappement (12), dans lequel lesdits éléments de fermeture (34) sont disposés à l'intérieur de l'espace annulaire (30) en position fermée et en position ouverte.

7. Distributeur selon l'une quelconque des revendications précédentes, dans lequel lesdits éléments de fermeture sont disposés à l'extérieur du corps (26) de telle sorte qu'ils sont à l'intérieur de l'élément d'échappement (12) en position fermée et essentiellement à l'extérieur de l'élément d'échappement (12) en position ouverte.

8. Distributeur selon l'une quelconque des revendications précédentes, dans lequel le dispositif de fermeture (33) comprend au moins un élément chariot (36, 36a, 36b) adapté pour porter une pluralité d'éléments de fermeture (34) pour une influence simultanée de ceux-là, dans lequel le dispositif d'entraînement comprend un élément d'entraînement associé à l'élément chariot.

9. Distributeur selon la revendication 8, dans lequel l'élément chariot pivote par rapport à l'un ou aux deux des centres du corps (26) et au périmètre du corps.

10. Distributeur selon l'une quelconque des revendications précédentes, dans lequel le dispositif de fermeture comprend au moins deux éléments chariots distincts (36a, 36b), dans lequel chaque élément chariot est adapté pour porter une pluralité d'éléments de fermeture, dans lequel le dispositif d'entraînement comprend une pluralité d'éléments d'entraînement et dans lequel chaque élément chariot est associé à un des éléments d'entraînement.

11. Distributeur selon la revendication 10, dans lequel il y a deux éléments chariot, dans lequel chaque élément chariot (36a, 36b) porte la moitié du nombre total d'éléments de fermeture, dans lequel le dispositif d'entraînement comprend deux éléments d'entraînement et dans lequel chaque élément chariot est associé à un élément d'entraînement individuel.

12. Distributeur selon la revendication 10 ou 11, dans lequel les éléments chariots sont disposés les uns par rapport aux autres de telle sorte que les éléments de fermeture sont situés à différents rayons du centre du corps (26),

13. Distributeur selon l'une quelconque des revendications 10 à 12, dans lequel les éléments chariots sont disposés les uns par rapport aux autres de telle sorte que les éléments de fermeture sont situés à essentiellement le même rayon du centre du corps (26).

14. Distributeur selon l'une quelconque des revendications précédentes, dans lequel le corps (26) comprend un couvercle (27) et une base (28), dans lequel ledit élément d'admission (32) est disposé de manière centrale sur ladite base (28).
